(19) Europäisches Patentamt
European Patent Office
Office européen des brevets

(11) Veröffentlichungsnummer: **0 636 647 A1**

# (12) EUROPÄISCHE PATENTANMELDUNG

(21) Anmeldenummer: **94111141.1**

(51) Int. Cl.[6]: **C08K 5/13**

(22) Anmeldetag: **18.07.94**

(30) Priorität: **30.07.93 DE 4325623**

(43) Veröffentlichungstag der Anmeldung: **01.02.95 Patentblatt 95/05**

(84) Benannte Vertragsstaaten: **DE FR GB IT**

(71) Anmelder: **BAYER AG**
**D-51368 Leverkusen (DE)**

(72) Erfinder: **Bohnenpoll, Martin Dr.**
**Hahnenweg 3**
**D-51061 Köln (DE)**
Erfinder: **Scholl, Thomas Dr.**
**Alte Wipperfürtherstrasse 24a**
**D-51469 Bergisch Gladbach (DE)**
Erfinder: **Kelbch, Stefan Dr.**
**Gerlinghausen 58**
**D- 53804 Much (DE)**
Erfinder: **Weidenhaupt, Hermann Joseph Dr.**
**Pfarrer-Forst-Strasse 3**
**D-52388 Nörvenich (DE)**

(54) **Verwendung von substituierten Phenolen als Ermüdungsschutzmittel für dynamisch beanspruchte Elastomere.**

(57) Phenole der allgemeinen Formel

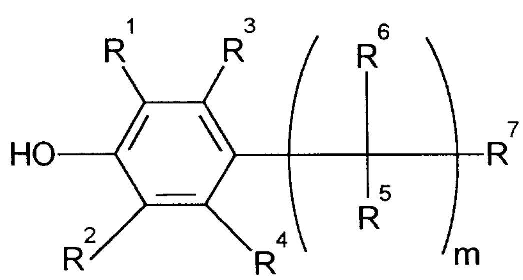

finden Verwendung als Ermüdungsschutzmittel für dynamisch beanspruchte Elastomermischungen, ohne daß es zu einer Verfärbung oder Abfärbung bei den Elastomerartikeln kommt.

EP 0 636 647 A1

Die Erfindung betrifft die Verwendung von substituierten Phenolen als Ermüdungsschutzmittel für dynamisch beanspruchte Elastomere.

Es ist bekannt, daß mechanische Ermüdung zur Rißbildung an der Oberfläche von Elastomerartikeln führt. Besonders schwere Schäden treten auf, wenn sich zunächst an der Oberfläche eine Anzahl kleiner Risse bildet, die anschließend schnell in die Tiefe wachsen und schließlich zum Reißen des Artikels führen. Derartige Risse verkürzen die Lebenserwartungen von Elastomerartikeln, wie KFZ-Reifen, Keilriemen, Förderbänder, Luftfedern, Achsmanschetten und Schuhsohlen, beträchtlich Es sind deshalb chemische Ermüdungsschutzmittel entwickelt worden, um die Bildung derartiger Risse unter dynamischer Beanspruchung zu verhindern bzw. zu verzögern. Dabei handelt es sich üblicherweise um N,N'-disubstituierte p-Phenylendiamine, die den Artikeln als Ermüdungsschutzmittel zugesetzt werden (vgl. DE 1 197 613).

Obwohl die Verwendung dieser wohlbekannten p-Phenylendiamine die Lebenserwartung dynamisch beanspruchter Elastomerartikel deutlich verbessert, zeigen selbst die besten Vertreter dieser Substanzklasse eine starke Tendenz zur Verfärbung bzw. zur Abfärbung. Die Bezeichnung "Abfärbung" meint in diesem Fall, die Fähigkeit des Schutzmittels durch ein polymeres Material zu diffundieren und die angrenzende Oberfläche zu verfärben. Diese diffusionsbedingte Abfärbung ist in den meisten Elastomerartikeln überaus unerwünscht, besonders in hell gefärbten Artikeln.

Ziel der vorliegenden Erfindung ist die Bereitstellung eines Schutzmittels, das einerseits eine gute Schutzwirkung gegen Materialermüdung bewirkt und andererseits in den Elastomerartikeln keine Verfärbung oder Abfärbung verursacht.

Es wurde nun gefunden, daß bestimmte substituierte Phenole einen sehr guten Ermüdungsschutz bei dynamisch beanspruchten Elastomermischungen zeigen, ohne daß es zu einer Verfärbung oder Abfärbung bei den Elastomerartikeln kommt. Darüber hinaus wird im Gegensatz zu den p-Phenylendiaminen die Vulkanisationskinetik bei der Herstellung von Gummiartikeln durch die erfindungsgemäßen Phenole nicht beeinträchtigt.

Gegenstand der vorliegenden Erfindung ist die Verwendung von Phenolen der Formel (I)

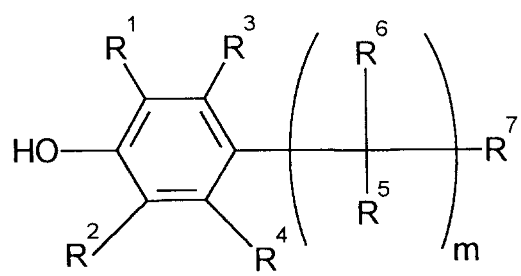

(I),

worin

- $R^1$ und $R^2$ gleich oder verschieden sind und für Wasserstoff, $R^8$, $OR^8$, $SR^8$, $COR^8$, $NHR^8$, $N(R^8)_2$ stehen mit der Maßgabe, daß $R^1$ und $R^2$ nicht gleichzeitig für Wasserstoff und nicht beide Reste gleichzeitig für tert.-Butyl oder ähnlich sterisch anspruchsvolle Reste stehen,
- $R^3$ bis $R^6$ gleich oder verschieden sind und für Wasserstoff, $OR^8$, $SR^8$, $COR^8$, $NHR^8$, $N(R^8)_2$, $CO_2R^8$ sowie $C_1$-$C_{12}$-Alkyl, $C_5$-$C_{10}$-Cycloalkyl und $C_6$-$C_{14}$-Aryl stehen,
- $R^7$ für Wasserstoff, $OR^8$, $SR^8$, $NHR^8$, $N(R^8)_2$, $COR^8$, $CO_2R^8$, $CONHR^8$ oder $CON(R^8)_2$ steht,
- $R^8$ $C_1$-$C_{12}$-Alkyl, $C_6$-$C_{20}$-Aryl, $C_6$-$C_{20}$-Aralkyl, $C_3$-$C_{12}$-Cycloalkyl sowie gegebenenfalls verzweigte oder substituierte Alkylen-oder Cycloalkylenreste mit bis zu 30 C-Atomen bedeutet und
- m für ganze Zahlen von 1 bis 6, bevorzugt 2 bis 3, besonders bevorzugt 2, steht,

als Ermüdungsschutzmittel für dynamisch beanspruchte Elastomere.

Bevorzugt ist die Verwendung von Phenolen der Formeln (II) und (III)

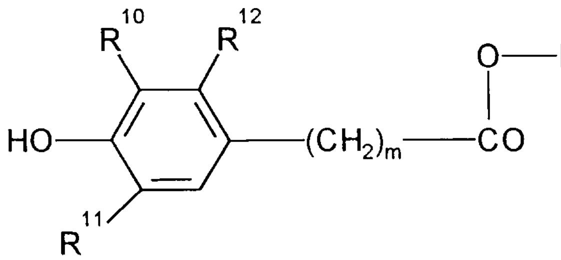 (II),

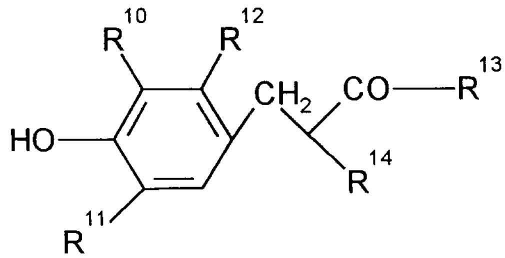 (III),

worin

| | |
|---|---|
| $R^9$ | für gegebenenfalls substituierte $C_1$-$C_{12}$-Alkylreste oder $C_3$-$C_{12}$-Cycloalkylreste steht, |
| $R^{10}$ und $R^{11}$ | gleich oder verschieden sind und Wasserstoff, $C_1$-$C_{12}$-Alkyl sowie $C_3$-$C_{12}$-Cycloalkyl bedeuten mit der Maßgabe, daß $R^{10}$ und $R^{11}$ nicht gleichzeitig für Wasserstoff und nicht beide Reste gleichzeitig für tert.-Butyl oder ähnlich sterisch anspruchsvolle Reste stehen, |
| $R^{12}$ | für Wasserstoff, $R^8$, $OR^8$, $SR^8$, $NHR^8$, $N(R^8)_2$ oder $COR^8$ steht mit der für $R^8$ bei Formel (I) angegebenen Bedeutung mit der Maßgabe, daß $R^{12}$ $R^8$, $OR^8$, $SR^8$, $NHR^8$, $N(R^8)$ oder $COR^8$ bedeutet, wenn $R^{11}$ tert.-Butyl oder ein ähnlich anspruchsvoller Rest ist und mit der Maßgabe, daß $R^{12}$ Wasserstoff bedeutet, wenn $R^{11}$ lineare Alkylreste darstellen, bevorzugt für Wasserstoff oder $C_1$-$C_{12}$-Alkyl, |
| $R^{13}$ | Wasserstoff, $R^8$, $OR^8$, $SR^8$, $NHR^8$ oder $N(R^8)_2$ darstellt mit der für $R^8$ bei Formel (I) angegebenen Bedeutung, |
| $R^{14}$ | für $C_1$-$C_{12}$-Alkyl, $C_3$-$C_{12}$-Cycloalkyl, $C_6$-$C_{12}$-Aryl oder für $COR^{13}$ steht und |
| m | für ganze Zahlen von 1 bis 6, bevorzugt 2 bis 3, besonders bevorzugt 2, steht, |

als Ermüdungsschutzmittel für dynamisch beanspruchte Elastomere.

Als Beispiele für gegebenenfalls substituierte Alkylreste in den Formeln (I) bis (III) mit 1 bis 12 C-Atomen seien genannt: Methyl, Ethyl, n-Propyl, iso-Propyl, n-Butyl, iso-Butyl, tert.-Butyl, n-Pentyl, iso-Pentyl, 2-Methylpentyl, 3-Methylpentyl, n-Octyl, iso-Octyl, n-Hexyl, 2,3-Dimethylbutyl, n-Heptyl, 2,4-Dimethylpentyl, 2,2,4-Trimethylpentyl, n-Dodecyl, Neopentyl, 2-Ethylbutyl, 2-Ethylhexyl, n-Nonyl, 2,4,4-Trimethylhexyl, 3,5,5-Trimethylhexyl und n-Decyl.

Beispiele für $C_3$-$C_{12}$-Cycloalkylreste in den Formeln (I) bis (III) sind: Cyclohexyl, 2-Methylcyclohexyl, 3-Methylcyclohexyl, 4-Methylcyclohexyl, Cyclododecyl, Cyclopentyl, Cyclohexylmethyl, 3,3,5-Trimethylcyclohexyl, 4-tert.-Butylcyclohexyl, Menthyl, Bornyl, Isobornyl, Cyclopropyl und Cyclobutyl.

Beispiele für $C_6$-$C_{20}$-Arylreste sind: Phenyl, 2-Methylphenyl, 3-Methylphenyl, 4-Methylphenyl und Naphthyl.

Beispiele für $C_6$-$C_{20}$-Aralkylreste sind: Benzyl, Phenylethyl, Phenylpropyl und Phenylbutyl.

Als besonders bevorzugte Phenole finden Verwendung:

3,5-Dimethyl-4-hydroxyphenyl-propionsäuremethylester, 3,5-Dimethyl-4-hydroxyphenyl-propionsäureethylester, 3,5-Dimethyl-4-hydroxyphenyl-propionsäurepropylester, 3,5-Dimethyl-4-hydroxyphenyl-propionsäureisopropylester, 3,5-Dimethyl-4-hydroxyphenyl-propionsäurebutylester, 3,5-Dimethyl-4-hydroxyphenyl-propionsäureisobutylester, 3,5-Dimethyl-4-hydroxyphenyl-propionsäuretertiärbutylester, 3,5-Di-methyl-4-hydroxyphenyl-propionsäurepentylester, 3,5-Dimethyl-4-hydroxyphenylpropionsäureisopentylester, 3,5-Dimethyl-4-hydroxyphenyl-propionsäure-2-methylpentylester, 3,5-Dimethyl-4-hydroxyphenyl-propionsaure-3-methylpentylester, 3,5-Dimethyl-4-hydroxyphenyl-propionsäureoctylester, 3,5-Dimethyl-4-hydroxyphenylpropionsäureisooctylester, 3,5-Dimethyl-4-hydroxyphenyl-propionsäurehexylester, 3,5-Dimethyl-4-hydroxyphenyl-propionsäure-2,3-dimethylbutylester, 3,5-Dimethyl-4-hydroxyphenyl-propionsäureheptylester, 3,5-Dimethyl-4-hydroxyphenyl-propionsäure-2,4-dimethylpentylester, 3,5-Dimethyl-4-hydroxyphenyl-propionsäure-2,2,4-trimethylpentylester, 3,5-Dimethyl-4-hydroxyphenyl-propionsäuredodecylester, 3,5-Dimethyl-4-hydroxyphenyl-propionsäureneopentylester, 3,5-Dimethyl-4-hydroxyphenyl-propionsäure-2-ethylbutylester, 3,5-Dimethyl-4-hydroxyphenyl-propionsäure-2-ethylhexylester, 3,5-Dimethyl-4-hydroxyphenyl-propionsäurenonylester, 3,5-Dimethyl-4-hydroxyphenyl-propionsäure-2,4,4-trimethylhexylester, 3,5-Dimethyl-4-hydroxyphenyl-propionsäure-3,5,5-trimethylhexylester, 3,5-Dimethyl-4-hydroxyphenyl-propionsäuredecylester, 5-tert.-Butyl-2,3-dimethyl-4-hydroxyphenylpropionsäuremethylester, 5-tert.-Butyl-2,3-dimethyl-4-hydroxyphenyl-propionsäureethylester, 5-tert.-Butyl-2,3-dimethyl-4-hydroxyphenyl-propionsaurepropylester, 5-tert.-Butyl-2,3-dimethyl-4-hydroxyphenyl-propionsäureisopropylester,5-tert.-Butyl-2,3-dimethyl-4-hydroxyphenyl-propionsäurebutylester, 5-tert.-Butyl-2,3-dimethyl-4-hydroxyphenyl-propionsäureisobutylester, 5-tert.-Butyl-2,3-dimethyl-4-hydroxyphenyl-propionsäuretertiärbutylester, 5-tert.-Butyl-2,3-dimethyl-4-hydroxyphenylpropionsäurepentylester, 5-tert.-Butyl-2,3-dimethyl-4-hydroxyphenyl-propionsäureisopentylester,5-tert.-Butyl-2,3-dimethyl-4-hydroxyphenyl-propionsäure-2-methylpentylester, 5-tert.-Butyl-2,3-dimethyl-4-hydroxyphenyl-propionsäure-3-methylpentylester, 5-tert.-Butyl-2,3-dimethyl-4-hydroxyphenyl-propionsäureoctylester, 5-tert.-Butyl-2,3-dimethyl-4-hydroxyphenyl-propionsäureisooctylester, 5-tert.-Butyl-2,3-dimethyl-4-hydroxyphenyl-propionsäurehexylester, 5-tert.-Butyl-2,3-dimethyl-4-hydroxyphenyl-propionsäure-2,3-dimethylbutylester, 5-tert.-Butyl-2,3-dimethyl-4-hydroxyphenyl-propionsäureheptylester. 5-tert.-Butyl-2,3-dimethyl-4-hydroxyphenyl-propionsäure-2,4-dimethylpentylester, 5-tert.-Butyl-2,3-dimethyl-4-hydroxyphenyl-propionsaure-2,2,4-trimethylpentylester, 5-tert.-Butyl-2,3-dimethyl-4-hydroxyphenyl-propionsäuredodecylester, 5-tert.-Butyl-2,3-dimethyl-4-hydroxyphenylpropionsäureneopentylester, 5-tert.-Butyl-2,3-dimethyl-4-hydroxyphenyl-propionsäure-2-ethylbutylester, 5-tert.-Butyl-2,3-dimethyl-4-hydroxyphenyl-propionsäure-2-ethylhexylester, 5-tert.-Butyl-2,3-dimethyl-4-hydroxyphenyl-propionsäurenonylester, 5-tert.-Butyl-2,3-dimethyl-4-hydroxyphenyl-propionsäure-2,4,4-trimethylhexylester, 5-tert.-Butyl-2,3-dimethyl-4-hydroxyphenyl-propionsäure-3,5,5-trimethylhexylester, 5-tert.-Butyl-2,3-dimethyl-4-hydroxyphenyl-propionsäuredecylester.

Die genannten Phenole können sowohl einzeln als auch im Gemisch untereinander eingesetzt werden.

Die erfindungsgemäßen Phenole der Formeln (I) bis (III) können den zu schützenden Elastomeren in Mengen von 0,01 bis 20 Gew.-%, bezogen auf die zu schützenden Elastomeren, eingesetzt werden. Bevorzugt wird eine Dosierung im Bereich von 0,1 bis 10 Gew.-%, besonders bevorzugt 0,7 bis 4 Gew.-%, gewählt.

Die Einarbeitung der erfindungsgemäßen Phenole (Additive) in die zu schützenden Elastomeren kann mit allen gängigen Mischaggregaten für die Polymer- bzw. Elastomerverarbeitung bewerkstelligt werden, wie beispielsweise mit Innenmischern, Mischwalzen oder Extrudern. Der Zeitpunkt der Zugabe kann am Anfang, am Ende oder in der Mitte des Mischzyklus liegen.

Zusätzlich zu den erfindungsgemäßen Phenolen können weitere Additive in die Elastomere eingearbeitet werden. Es können grundsätzlich alle in der Kautschuk-bzw. Kunststoffindustrie bekannten Additive eingearbeitet werden.

Beispiele für derartige Additive sind: Beschleuniger, Verzögerer, Schwefel, Schwefelspender, Peroxide, Vernetzer, Alterungsschutzmittel, Wärmestabilisatoren, Lichtschutzmittel, Ozonschutzmittel, Wachse, Verarbeitungshilfsmittel, Weichmacher, Tackifier, Treibmittel, Farbstoffe, Pigmente, Streckmittel, Füllstoffe, organische Säuren, Metalloxide und Aktivatoren, wie Triethanolamin, Polyethylenglykol oder Hexantriol. Diese Additive können den Elastomeren in den bekannten und üblichen Mengen zugegeben werden.

Bevorzugt ist der Zusatz nichtverfärbender Ozonschutzmittel, wie Vulkazon AFS (3,9-Di-cyclohex-3-enyl-2,4,8,10-tetraoxa-spiro[5.5]undecan) oder Vulkazon AFD ((Cyclohex-3-enylidenmethoxymethyl)-benzol) der Fa. Bayer AG, Leverkusen, Germany, oder handelsüblicher Ozonschutzwachse, wie Antilux 110 oder Antilux 111 der Fa. Rhein-Chemie Rheinau GmbH.

Durch den Zusatz von nichtverfärbenden Ozonschutzmittel der genannten Art kann die Wirkung der erfindungsgemäßen Phenole als Ermüdungsschutzmittel für dynamisch beanspruchte Elastomere noch erhöht werden. Die nichtverfärbenden Ozonschutzmittel werden bevorzugt in Mengen von 0,5 bis 5 Gew.-%, bezogen auf die Elastomere, den zu schützenden Elastomeren zugegeben.

Als Elastomere im Sinne der Erfindung sind grundsätzlich alle bekannten Elastomeren geeignet. Dazu gehören Polyurethane, thermoplastische Elastomere und Kautschuke aller Art. Bevorzugt werden Natur- und Synthesekautschuke, die mindestens 8 Doppelbindungen pro 1000 C-Atome aufweisen, als Elastomere eingesetzt.

Als Beispiele für Elastomere seien genannt: Naturkautschuk, Synthesekautschuke wie Polybutadien, Polyisoprenkautschuk, Styrol-Butadien-Kautschuke, Acrylnitril-Butadien-Kautschuke, hydrierte Acrylnitril-Butadien-Kautschuke, Polychloropren, Isopren-Isobutylen-Kautschuke, Siliconkautschuke halogenierte Copolymere aus Isopren und Isobutylen, Ethylen-Propylen-Dien-Kautschuke, Propylenoxid-Allylglycidether-Copolymere, Acrylnitril-Butadien-Styrol-Copolymere, Butadien-Acrylsäurealkylester-Copolymere, Polyoctenylen und Polynorbonen, sowie Mischungen davon.

Als Beispiele für thermoplastische Elastomere seien genannt: Styrol-Butadien-Styrol-Blockpolymerisate und Styrol-Isopren-Styrol-Blockpolymerisate sowie Blends aus Acrylnitril-Butadien-Kautschuk und Polyvinylchlorid oder Ethylen-Propylen-Dien-Kautschuk und Polypropylen.

**Beispiel 1**

5-tert.-Butyl-2,3-dimethyl-4-hydroxyphenyl-propionsäuremethylester wurde gemäß DE 2 445 345 hergestellt. Es wurden farblose Kristalle erhalten.
Schmelzpunkt: 68-71 °C.

**Beispiel 2**

4-(4-Hydroxy-3,5-dimethyl-phenyl)-4-oxo-but-2-ensäure: Zu einer Lösung von 122 g 2,6-Dimethylphenol in 800 ml trockenem Chlorbenzol wurden bei einer Temperatur von 5 bis 10 °C 267 g Aluminiumchlorid portionsweise zugegeben. Anschließend wurde bei 5 bis 10 °C eine Lösung von 98 g Maleinsäureanhydrid in 300 ml Chlorbenzol zugetropft. Es wurde 12 Stunden bei Raumtemperatur gerührt, auf 1500 g Eis gegossen, mit 500 ml konzentrierter Salzsäure angesäuert und filtriert. Der Rückstand wurde gründlich mit Salzsäure und Wasser gewaschen und an der Luft getrocknet. Ausbeute: 183 g gelbe Kristalle, F. 192 bis 198 °C.

| Analyse: | berechnet | gefunden |
|---|---|---|
| C | 65,45 % | 64,6 % |
| H | 5,45 % | 5,4 % |

**Beispiel 3**

3,5-di-Isopropyl-4-hydroxyphenyl-propionsäuremethylester wurde gemäß US 3 644 482 hergestellt. Es wurde ein gelbes Öl erhalten.
Kp 0,08: 122-125 °C.

**Beispiel 4**

3,5-Dimethyl-4-hydroxyphenyl-propionsäuremethylester: 146,4 g 2,6-Dimethylphenol, 44,8 g Kaliumtertiärbutylat und 40 g tert.-Butanol wurden unter Stickstoff bis zum Rückfluß erhitzt. Dann wurden 51,6 g Acrylsäuremethylester zugetropft und 18 Stunden am Rückfluß erhitzt. Der Ansatz wurde mit Essigsäure neutralisiert und bei 60 °C im Vakuum eingedampft. Der Rückstand wurde bei einem Druck von 0,05 bar destilliert. Die zwischen 98 °C und 148 °C übergehende Fraktion wurde mit Petrolether verrührt und filtriert. Der Rückstand wurde erneut im Hochvakuum destilliert. Ausbeute: 74 g farblose Kristalle, F. 71 bis 74 °C, $Kp_{0,05}$: 130 bis 140 °C.

| Analyse: | berechnet | gefunden |
|---|---|---|
| C | 69,23 % | 69,1 % |
| H | 7,69 % | 7,7 %. |

**Beispiel 5**

3-(4-Hydroxy-3,5-dimethyl-phenyl)-propionsäure-2-ethyl-hexylester: 19,4 g 3,5-Dimethyl-4-hydroxyphenyl-propionsäure (Herstellung durch alkalische Verseifung von Beispiel 4) wurden mit 13,0 g 2-Ethyl-1-hexanol, 70 ml Toluol und 0,5 g p-Toluolsulfonsäure über Nacht am Rückfluß gekocht. Der Ansatz wurde in 200 ml Natriumhydrogencarbonat-Lösung gegossen, mit 300 ml Essigester extrahiert, getrocknet, im Vakuum eingedampft und im Hochvakuum ausdestilliert. Es wurden 26,1 g dunkles Öl erhalten.

**Beispiel 6**

4-Hydroxy-3,5-dimethyl-benzaldehyd: 184 g 2,6-Dimethylphenol, 2,5 l Eisessig, 420 g Hexamethylentetramin und 500 ml Wasser wurden 6 Stunden am Rückfluß gekocht. Der Ansatz wurde am Raumtemperatur abgekühlt und mit 2,5 l Wasser verrührt. Der ausgefallene Feststoff wurde abfiltriert, getrocknet und aus Toluol umkristallisiert.
Ausbeute: 111 g gelbliche Kristalle, F. 104-106 °C.

**Beispiel 7**

3-(4-Hydroxy-3,5-dimethyl-benzyliden)-pentan-2,4-dion: 43,5 g des in Beispiel 6 hergestellten Produkts wurden in 200 ml Toluol gelöst und mit 29 g Acetylaceton, 0,8 g Piperidin und 0,3 g Eisessig 6 Stunden am Wasserabscheider rückflussiert. Die Lösung wurde auf 5 °C abgekühlt. Der ausgefallene Feststoff wurde abfiltriert, mit 2 n HCl gewaschen, getrocknet und aus wenig Acetonitril umkristallisiert. Es wurden 34 g gelbe Kristalle erhalten.
F. 137-140 °C.

**Beispiel 8**

3-(4-Hydroxy-3,5-dimethyl-benzyl)-pentan-2,4-dion: 30 g des in Beispiel 7 hergestellten Produkts wurden in 150 ml THF gelöst und nach Zugabe von 3 g Pt/C (5 %) 5 Stunden bei 100 °C und einem Wasserstoffdruck von 100 bar hydriert. Nach Abfiltrieren des Katalysators wurde die Lösung eingedampft und der Rückstand mit 30 ml Xylol gewaschen.
Ausbeute: 17 g nahezu farbloses Pulver, F. 64-86 °C.

**Beispiel 9**

3-(4-Hydroxy-3,5-dimethyl-phenyl)-1-pipendin-1-yl-propan-1-on: 19,4 g 3,5-Dimethyl-4-hydroxyphenylpropionsäure (Herstellung durch alkalische Verseifung von Beispiel 4) wurden mit 50 ml Xylol, 8,5 g Piperidin und 0,5 g p-Toluolsulfonsäure 12 Stunden am Wasserabscheider rückflussiert. Die Lösung wurde mit 1 n HCl und Natriumhydrogencarbonat-Lösung gewaschen und nach Trocknen mit Natriumsulfat im Vakuum eingedampft. Der Rückstand wurde aus 20 ml Toluol umkristallisiert.
Ausbeute: 8 g Kristalle, F. 125-131 °C.

| Analyse: | berechnet | gefunden |
|---|---|---|
| C | 73,56 % | 73,5 % |
| H | 8,81 % | 9,2 % |
| N | 5,36 % | 5,3 %. |

**Beispiel 10**

4-(4-Hydroxy-3,5-dimethyl-phenyl)-buttersäuremethylester: 123 g der in Beispiel 2 hergestellten Substanz wurden in 1100 ml Tetrahydrofuran gelöst und nach Zusatz von 10 g Platin/Kohle (5 %ig) bei einem Druck von 150 bar Wasserstoff und einer Temperatur von 100 °C 9 Stunden hydriert. Nach dem Abfiltrieren des Katalysators wurde die Lösung im Vakuum eingedampft. Der Rückstand wurde in 350 ml Chlorbenzol gelöst und nach Zugabe von 70,4 g Methanol und 2 g p-Toluolsulfonsäure 18 Stunden am Rückfluß gekocht. Der Ansatz wurde auf eine wäßrige Natriumhydrogencarbonatlösung gegossen, mit Essigester extrahiert, mit Natriumsulfat getrocknet und im Vakuum eingedampft. Der Rückstand wurde bei einem Druck von 0,1 bar destilliert. Die zwischen 135 °C und 137 °C übergehende Fraktion wurde mit Leichtbenzin verrührt und filtriert. Der Rückstand wurde an der Luft getrocknet. Ausbeute: 60 g farblose Kristalle, F. 50 bis 53 °C.

| Analyse: | berechnet | gefunden |
|---|---|---|
| C | 70,24 % | 70,3 % |
| H | 8,11 % | 8,0 % |

**Beispiel 11**

2,6-Dimethyl-4-(3-piperidin-1-yl-propyl)-phenol: 5 g des in Beispiel 9 hergestellten Produkts wurden in 50 ml THF gelöst und nach Zugabe von 0,8 g Lithiumaluminiumhydrid 2 Stunden bei Raumtemperatur gerührt. Es wurden 40 ml Essigester, 40 ml Methanol und 60 ml Wasser zugegeben. Anschließend wurde der Ansatz mit Toluol extrahiert. Die organische Phase wurde mit Wasser gewaschen, mit Natriumsulfat getrocknet und anschließend im Vakuum eingedampft. Der Rückstand wurde aus Essigester umkristallisiert.
Ausbeute: 2,5 g beigefarbene Kristalle, F. 88-92 °C.

| Analyse: | berechnet | gefunden |
|---|---|---|
| C | 77,73 % | 77,5 % |
| H | 10,12 % | 10,6 % |
| N | 5,66 % | 5,7 %. |

**Beispiel 12**

4-(3-Hydroxy-propyl)-2,6-dimethyl-phenol: 20,8 g des in Beispiel 4 hergestellten Produkts wurden in 370 ml THF gelöst und nach Zugabe von 5 g Lithiumaluminiumhydrid 2 Stunden bei Raumtemperatur gerührt. Es wurden vorsichtig Essigester, Methanol und Wasser zugesetzt. Anschließend wurde das Gemisch mit konz. Salzsäure auf pH 1 angesäuert und mit Toluol extrahiert. Die organische Phase wurde mit Natriumsulfat getrocknet und eingedampft. Der Rückstand wurde im Vakuum destilliert.
Ausbeute: 7 g farbloses Öl, $Kp_{20}$: 185-186 °C. Reinheit 90 % (GC).

**Prüfung der erfindungsgemäßen Phenole**

**Prüfmethoden**

Die Ermüdungsschutzwirkung der untersuchten Additive wurde mit einem Ermüdungsprüfgerät der Firma Coesfeld, Dortmund und mit dem bei Bayer entwickelten Tear Analyser (U. Eisele, S. Kelbch, H.W. Engels; Kautschuk + Gummi Kunststoffe 45 (12/92), 1064) gemessen. Der Tear Analyser bestimmt quantitativ die Rißwachstumsgeschwindigkeit bei dynamischer Belastung und kompensiert simultan während der Messung eine Probenlängung aufgrund des dynamischen tension sets.

Die Prüfung erfolgte mit streifenförmigen Proben mit seitlichem, 1 mm tiefen Einschnitt bei einer Temperatur von 70 °C und einer Deformationsamplitude von 35 % bzw. 50 %. Angegeben sind die Zahl der Zyklen bis zum Bruch des Prüfkörpers (Mittelwerte mehrerer Messungen) und in speziellen Fällen die Abhängigkeit der Rißwachstumsgeschwindigkeit von der Amplitude.

**Allgemeine Prüfrezeptur für Beispiele 14 bis 20**

100 Gew.-Teile Naturkautschuk TSR 5/700
48 Gew.-Teile Ruß Corax N 115 der Fa. Degussa
2 Gew.-Teile Stearinsäure
1 Gew.-Teil Antilux 110 der Fa. Rhiein Chemie Rheinau GmbH
1 Gew.-Teil Vulkanox HS (Bayer AG)
3,5 Gew.-Teile ZnO/RS (Zinkweiß Forschungsgesellschaft mbH)
1,2 Gew.-Teile Schwefel
1,4 Gew.-Teile Vulkacit NZ® (Bayer AG)
variabel Gew.-Teile Schutzmittel gemäß Erfindung
variabel Gew.-Teile Vulkazon AFS (Bayer AG)

Die Prüfkörper wurden 20 Minuten bei 150 °C vulkanisiert.

**Beispiel 13**

**Prüfung auf Verfärbung**

In eine helle NR-Mischung der unten angegebenen Zusammensetzung wurden mehrere Additive eingearbeitet und unter der Xenonlampe nach DIN 53387 auf ihre Verfärbung geprüft.
100 Gew.-Teile Naturkautschuk Helle Crepe
10 Gew.-Teile ZnO aktiv (Bayer AG)
1 Gew.-Teil Stearinsäure
10 Gew.-Teile Bayer Titan A (Bayer AG)
60 Gew.-Teile Blanc Fix N (Kali-Chemie)
2 Gew.-Teile Schwefel
0,5 Gew.-Teile Vulkacit Thiuram/C (Bayer AG)
1 Gew.-Teil Schutzmittel gemäß Erfindung.

Als Schutzmittel wurden die folgenden Substanzen eingesetzt:
Mischung 1: Nullprobe
Mischung 2: Vulkanox 4020 (Bayer AG)
Mischung 3: Beispiel 4
Mischung 4: Durazone 37 von UNIROYAL
Die Mischung mit Vulkanox 4020 war stark verfärbend, die Mischung mit Durazone 37 schwach verfärbend (aber stärker verfärbend als die Nullprobe) und die Mischung mit Beispiel 4 war etwas weniger verfärbend als die Nullprobe.

**Beispiel 14**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| Vulkanox 4020 | 1,4 | 0 | 300000 |
| Beispiel 4 | 1,0 | 1 | 190000 |
| Beispiel 4 | 1,4 | 1 | 230000 |
| Beispiel 4 | 2,0 | 1 | 290000 |

In diesem Test zeigte die in Beispiel 4 hergestellte Verbindung eine ebenso gute Wirkung wie Vulkanox 4020, wenn auch mit etwas höherer Dosierung.

| | | differentielle Rißfortpflanzungsgeschwindigkeit 1/c(dc(dn) in (Mc-1) | | | |
|---|---|---|---|---|---|
| Amplitude (%) | Nullprobe | 1,0 phr Beispiel 4 | 1,4 phr Beispiel 4 | 2,0 phr Beispiel 4 | 1,4 phr Vulkanox 4020 |
| 30 | | 5,5 | 3,29 | 3,41 | |
| 35 | 31,29 | 8,7 | 7,39 | 5,102 | 5,2 |
| 40 | | 12,71 | 8,183 | 6,46 | 8,3 |
| 45 | 65,3 | 14,4 | 20,86 | 16,06 | 11,48 |
| 50 | | 111 | 52,38 | 17,65 | 25,5 |

**Beispiel 15**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| Nullprobe | 0 | 0 | 112000 |
| Beispiel 8 | 1,4 | 0 | 135000 |
| Beispiel 5 | 1,4 | 0 | 188000 |
| Vulkanox 4020 | 1,4 | 0 | 265000 |

Die in Beispiel 5 hergestellte Verbindung zeigte in diesem Test eine recht gute Wirkung.

**Beispiel 16**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| Nullprobe | 0 | 0 | 54000 |
| Beispiel 4 | 1,4 | 0 | 93000 |
| Beispiel 4 | 2,0 | 0 | 85000 |
| Beispiel 1 | 1,4 | 0 | 93000 |
| Beispiel 1 | 2,0 | 0 | 107000 |

Die in Beispiel 1 hergestellte Verbindung zeigte in diesem Versuch ebenso gute Wirkungen wie Beispiel 4.

**Beispiel 17**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| Nullprobe | 0 | 0 | 35000 |
| Vulkanox 4020 | 1,4 | 0 | 145000 |
| Beispiel 11 | 1,4 | 0 | 100000 |
| Beispiel 11 | 2,0 | 0 | 122000 |
| Beispiel 3 | 2,0 | 0 | 60000 |
| Beispiel 3 | 2,5 | 0 | 90000 |
| Beispiel 12 | 2,0 | 0 | 54000 |
| Beispiel 12 | 2,5 | 0 | 75000 |

**Beispiel 18**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| Ohne | 0 | 0 | 40000 |
| Vulkanox 4020 | 1,4 | 0 | 135000 |
| Durazone 37 | 2,0 | 0 | 60000 |
| Durazone 37 | 2,5 | 0 | 30000 |
| Beispiel 5 | 2,0 | 0 | 75000 |
| Beispiel 5 | 2,5 | 0 | 95000 |
| Beispiel 8 | 2,0 | 0 | 96000 |
| Beispiel 8 | 2,5 | 0 | 105000 |

**Beispiel 19**

**Prüfung auf Ermüdungsschutzwirkung**

In die anfangs angegebene Prüfrezeptur wurden mehrere Schutzmittel eingearbeitet und auf ihre Wirkung geprüft. Es wurden folgende Wirkungen beobachtet:

| Schutzmittel | Dosierung | Vulkazon-AFS-Dosierung | Zyklen |
|---|---|---|---|
| ohne | 0 | 0 | 40000 |
| Vulkanox 4020 | 1,4 | 0 | 195000 |
| Beispiel 10 | 1,4 | 0 | 85000 |
| Beispiel 10 | 2,0 | 0 | 145000 |

**Beispiel 20**

**Prüfung auf Ermüdungsschutzwirkung**

In die anfangs angegebene Prüfrezeptur wurden mehrere Schutzmittel eingearbeitet und auf ihre Wirkung geprüft. Es wurden die folgenden Wirkungen beobachtet:

| Schutzmittel | Dosierung | Vulkazon-AFS-Dosierung | Zyklen |
|---|---|---|---|
| ohne | 0 | 0 | 51000 |
| Vulkanox | 1,4 | 0 | 152000 |
| Beispiel 4 | 1,4 | 0 | 104000 |
| Beispiel 4 | 2,0 | 0 | 132000 |
| Beispiel 4 | 2,0 | 1,0 | 140000 |
| Irganox 1010 | 1,4 | 0 | 101000 |
| Irganox 1010 | 2,0 | 0 | 109000 |

In diesem Beispiel sieht man deutlich, daß einige handelsübliche Phenole, wie zum Beispiel Irganox 1010, durchaus eine gewisse Ermüdungsschutzwirkung besitzen. Im Gegensatz zu den erfindungsgemäßen Verbindungen ist aber bei diesen Substanzen trotz Erhöhung der Dosierung keine Anhebung der Wirkung auf ein technisch interessantes Niveau möglich.

**Beispiel 21**

Es wurden mehrere Substanzen in eine NR-Laufflächenmischung mit der folgenden Rezeptur eingearbeitet.

| | |
|---|---|
| Naturkautschuk TSR 5/700 | 100,0 Gew.-Teile |
| ZnO aktiv (Bayer AG) | 5,0 Gew.-Teile |
| Corax 6-ISAF/N200 (Degussa) | 48,0 Gew.-Teile |
| Ingralen 450 (BASF AG) | 2,5 Gew.-Teile |
| Stearinsäure | 3,0 Gew.-Teile |
| Schwefel | 2,5 Gew.-Teile |
| Vulkacit CZ/MG (Bayer AG) | 0,5 Gew.-Teile |
| Testsubstanz | variabel Gew.-Teile |

Die Prüfkörper wurden 40 Minuten bei 140 °C vulkanisiert.

| Rezeptur: | 1* | 2* | 3* | 4* | 5 | 6 | 7 |
|---|---|---|---|---|---|---|---|
| TSR 5 | 100,0 | | | | | | |
| ZnO aktiv | 5,0 | | | | | | |
| Corax N220 | 48,0 | | | | | | |
| Ingralen 450 | 2,5 | | | | | | |
| Stearinsäure | 3,0 | | | | | | |
| Schwefel | 2,5 | | | | | | |
| Vulkacit CZ/MG | 0,5 | | | | | | |
| Vulkanox HS | - | 0,7 | - | - | - | - | 0,7 |
| Vulkanox 4020 LG | - | - | 0,7 | - | - | - | - |
| Vulkanox NKF | - | - | - | 0,7 | - | - | - |
| Beispiel 4 | - | - | - | - | 0,7 | 1,4 | 0,7 |
| Mooney (Anvulk. 120°C) | | | | | | | |
| Scorchtime 5ME Min | 14,8 | 19,5 | 14,7 | 12,9 | 12,7 | 11,6 | 15,8 |
| Mooney (Vikos. 100°C) | | | | | | | |
| Mooney ML4 | 85,7 | 103,1 | 93,5 | 89,5 | 91,8 | 86,8 | 98,8 |
| Vulkameter 140°C | | | | | | | |
| ts (min) | 8,0 | 8,3 | 7,9 | 7,8 | 8,3 | 7,7 | 8,2 |
| t10 (min) | 7,2 | 7,4 | 6,3 | 6,9 | 7,3 | 6,9 | 7,1 |
| t70 (min) | 17,1 | 18,0 | 19,2 | 18,1 | 18,1 | 17,0 | 18,1 |
| t90 (min) | 27,4 | 29,3 | 31,6 | 29,5 | 29,5 | 27,6 | 29,8 |
| t90-t10 (min) | 20,2 | 21,9 | 25,3 | 22,6 | 22,2 | 20,7 | 22,7 |
| Delta F (N) | 42,6 | 40,3 | 40,6 | 42,2 | 42,6 | 43,1 | 39,9 |

*Vergleichsbeispiel

| Automatische Elastomerprüfung | | | | | | | |
|---|---|---|---|---|---|---|---|
| | 1 | 2 | 3 | 4 | 5 | 6 | 7 |
| Modul 100 (MPa) | 2,9 | 2,8 | 2,7 | 2,9 | 2,8 | 2,9 | 2,8 |
| Modul 300 (MPa) | 14,2 | 13,9 | 13,6 | 14,4 | 13,7 | 14,3 | 14,1 |
| Festigkeit (MPa) | 25,5 | 26,1 | 24,6 | 26,3 | 25,3 | 24,3 | 24,7 |
| Dehnung (%) | 512 | 530 | 512 | 529 | 518 | 498 | 513 |
| Weiterreißfestigkeit (N) | 440 | 476 | 486 | 468 | 456 | 420 | 463 |
| Härte (Shore A) 23 °C | 70 | 70 | 70 | 71 | 70 | 69 | 68 |
| Härte (Shore A) 70 °C | 67 | 65 | 65 | 67 | 66 | 67 | 66 |
| Elastizität (%) 23 °C | 48 | 47 | 47 | 46 | 48 | 47 | 46 |
| Elastizität (%) 70 °C | 60 | 59 | 60 | 59 | 61 | 61 | 60 |
| Abrieb cm m | 112 | 109 | 109 | 111 | 111 | 111 | 109 |
| Roelig 0 °C | | | | | | | |
| Tan-D | 0,183 | 0,187 | 0,190 | 0,190 | 0,184 | 0,187 | 0,192 |
| E' (MPa) | 10,579 | 9,700 | 10,783 | 10,181 | 9,899 | 10,019 | 10,314 |
| E'' (MPa) | 1,937 | 1,821 | 2,058 | 1,937 | 1,823 | 1,882 | 1,980 |
| Roelig 60 °C | | | | | | | |
| Tan-D | 0,091 | 0,093 | 0,093 | 0,092 | 0,087 | 0,089 | 0,095 |
| E' (MPa) | 8,504 | 7,471 | 8,337 | 8,134 | 8,133 | 8,095 | 8,009 |
| E'' (MPa) | 0,775 | 0,695 | 0,782 | 0,752 | 0,709 | 0,721 | 0,765 |

**Prüfung auf Ermüdungsschutzwirkung**

Anders als in den vorherigen Beispielen erfolgte die Prüfung der Ermüdungsschutzwirkung in diesem Fall nach einem firmeneigenen Verfahren. In diesem Test wird eine Kette von mehreren Prüfkörpern einer Ermüdungsprüfung auf einer Kettenermüdungsmaschine unterworfen. Das Prüfverfahren ist in der ASTM-Vorschrift D 430-59 (Reapproved 1973) unter der Methode C - DuPont de Nemours and Co Flexing Machine - beschrieben. Abweichend von der ASTM-Vorschrift wurden Proben ohne Gewebeeinlagen und mit besonderen Profilnuten statt V-förmigen Rillen benutzt.

Die Bewertung des Zustands der Prüfkörper erfolgt visuell nach je 500 000 Biegungen. Die einzelnen Bewertungen werden zu einer mittleren Bewertung, dem sog. B*-Wert zusammengefaßt.

$$B^* = \frac{1}{z} \sum_{i=1}^{z} \frac{B_i}{n_i}$$

$B^*$ = Gesamtbewertung der Ermüdungsbeständigkeit über $n_z$ Millionen Biegungen
$B_i$ = i-te Bewertung (i = 1,2 ...., z)
$n_i$ = zugehörige Anzahl der Millionen Biegungen.

Kleineres B* bedeutet bessere Ermüdungsbeständigkeit. Die Auswertung erfolgt graphisch über die Auftragung des B*-Wertes gegen die Dauer der Ermüdung. Die Steigung dieser Kurven ist ein Maß für die Wirkung eines Schutzmittels.

| **B*-Werte** | | | | | | |
|---|---|---|---|---|---|---|
| **Testsubstanz** | **Ermüdungsdauer (in Millionen Zyklen)** | | | | | |
| | 0,5 | 1 | 2 | 3 | 4 | 5 |
| Ohne Testsubstanz* | 0,25 | 0,5 | 0,729 | abgebrochen | | |
| 0,7 phr Vulkanox HS* | 0,25 | 0,375 | 0,396 | 0,443 | 0,479 | abgebrochen |
| 0,7 phr Vulkanox 4020* | 0 | 0 | 0,021 | 0,026 | 0,052 | 0,072 |
| 0,7 phr Vulkanox NKF* | 0 | 0,062 | 0,146 | 0,266 | 0,325 | abgebrochen |
| 0,7 phr Beispiel 4 | 0 | 0,062 | 0,083 | 0,094 | 0,138 | 0,177 |
| 1,4 phr Beispiel 4 | 0 | 0 | 0 | 0,031 | 0,056 | 0,088 |
| 0,7 phr Vulkanox HS + (0,7) phr Beispiel 4 | 0 | 0 | 0,021 | 0,057 | 0,108 | 0,161 |

* Vergleichsbeispiel

## Beispiel 22

Analog zu der Prüfung in Beispiel 21 wurde die Wirkung des in Beispiel 4 synthetisierten Schutzmittels in Abhängigkeit von der Wachszugabe geprüft.

| **B*-Werte** | | | | | | |
|---|---|---|---|---|---|---|
| **Testsubstanz** | **Ermüdungsdauer (in Millionen Zyklen)** | | | | | |
| | 0,5 | 1 | 2 | 3 | 4 | 5 |
| Ohne Schutzmittel, +0,5 phr Antilux 111* | 0,25 | 0,312 | 0,458 | 0,552 | abgebrochen | |
| 2,0 phr Vulkanox, +0,5 phr Antilux 111* | 0 | 0 | 0 | 0,01 | 0,021 | 0,042 |
| 2,0 phr Vulkanox HS, +0,5 phr Antilux 111* | 0 | 0,125 | 0,125 | 0,114 | 0,123 | 0,161 |
| 2,0 phr Beispiel 4, +0,5 phr Antilux 111 | 0 | 0 | 0,021 | 0,026 | 0,064 | 0,095 |
| 2,0 phr Beispiel 4, +2,0 phr Antilux111 | 0 | 0 | 0 | 0,01 | 0,033 | 0,053 |

* Vergleichsbeispiel

## Beispiel 23

Prüfung der Beeinflussung der Vulkanisationskinetik

In eine Butylkautschukmischung der unten angegebenen Rezeptur wurden mehrere Substanzen eingearbeitet.

| | |
|---|---|
| Polysar Brombutyl 2030 (Firma Polysar) | 100,0 Gew.-Teile |
| Ruß N 660 (Degussa) | 60,0 Gew.-Teile |
| Ingraplast SRL (Firma Fuchs Mineralölwerk) | 7,0 Gew.-Teile |
| Pentalyn A (Firmal Hercules) | 4,0 Gew.-Teile |
| Stearinsäure | 1,0 Gew.-Teile |
| ZnO RS | 3,0 Gew.-Teile |
| Schwefel | 0,5 Gew.-Teile |
| Vulkacit DM/C (Bayer AG) | 1,3 Gew.-Teile |
| Testsubstanz | variabel Gew.-Teile |

Gemessen wurde die Anvulkanisationszeit bei 130 ° C.

| Rezeptur | 1* | 2* | 3* | 4 | 5 |
|---|---|---|---|---|---|
| Polysar Brombutyl 2030 | 100,0 | | | | |
| Ruß N 660 | 60,0 | | | | |
| Ingraplast SRL | 7,0 | | | | |
| Pentalyn A | 4,0 | | | | |
| Stearinsäure | 1,0 | | | | |
| ZnO RS | 3,0 | | | | |
| Schwefel | 0,5 | | | | |
| Vulkacit DM/C | 1,3 | | | | |
| Vulkanox 4020 | -- | 1,0 | 2,0 | -- | -- |
| Beispiel 4 | -- | -- | -- | 1,0 | 2,0 |
| Mooney Anvulk. bei 130 ° C Scorchtime 5ME (min) | 21,5 | 9,4 | 6,5 | 16,8 | 15,4 |

* Vergleichsbeispiel

Aus diesen Daten geht hervor, daß die erfindungsgemäßen Phenole im Gegensatz zu den Standardschutzmitteln keinen nennenwerten Einfluß auf die Vulkanisationskinetik nehmen.

**Patentansprüche**

**1.** Verwendung von Phenolen der Formel

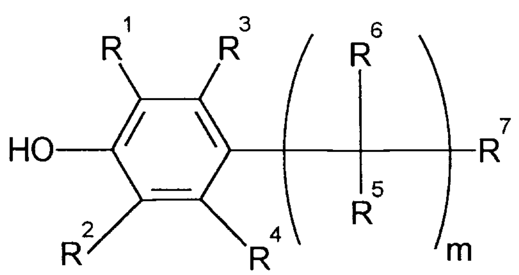

(I),

worin

$R^1$ und $R^2$ gleich oder verschieden sind und für Wasserstoff, $R^8$, $OR^8$, $SR^8$, $COR^8$, $NHR^8$, $N(R^8)_2$ stehen mit der Maßgabe, daß $R^1$ und $R^2$ nicht gleichzeitig für Wasserstoff und nicht beide Reste gleichzeitig für tert.-Butyl oder ähnlich sterisch anspruchsvolle Reste stehen,

$R^3$ bis $R^6$ gleich oder verschieden sind und für Wasserstoff, $OR^8$, $SR^8$, $COR^8$, $NHR^8$, $N(R^8)_2$, $CO_2R^8$ sowie für $C_1$-$C_{12}$-Alkyl, $C_5$-$C_{10}$-Cycloalkyl und $C_6$-$C_{14}$-Aryl stehen,

$R^7$ für Wasserstoff, $OR^8$, $SR^8$, $NHR^8$, $N(R^8)_2$, $COR^8$, $CO_2R^8$, $CONHR^8$ oder $CON(R^8)_2$ steht,

$R^8$ $C_1$-$C_{12}$-Alkyl, $C_6$-$C_{20}$-Aryl, $C_6$-$C_{20}$-Aralkyl, $C_3$-$C_{12}$-Cycloalkyl sowie gegebenenfalls verzweigte oder substituierte Alkylen-oder Cycloalkylenreste mit bis zu 30 C-Atomen bedeutet und

m für ganze Zahlen von 1 bis 6, bevorzugt 2 bis 3, besonders bevorzugt 2, steht,

als Ermüdungsschutzmittel für dynamisch beanspruchte Elastomermischungen.

**2.** Verwendung der in Anspruch 1 genannten Phenole der Formel (I) in Kombination mit Ozonschutzmitteln als Ermüdungsschutzmittel für dynamisch beanspruchte Elastomermischungen.

**3.** Verwendung von Phenolen der Formel (I) als Ermüdungsschutzmittel für dynamisch beanspruchte Elastomere in Mengen von 0,1 bis 10 Gew.-%, bezogen auf die zu schützenden Elastomeren.

Europäisches Patentamt

# EUROPÄISCHER RECHERCHENBERICHT

Nummer der Anmeldung
EP 94 11 1141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-2 991 272 (R.E. MORRIS)<br>* Spalte 1, Zeile 10 - Zeile 21 *<br>* Beispiel 1; Tabelle 1 *<br>* Ansprüche 1,5,7 *<br>----- | 1,3 | C08K5/13 |
| | | | **RECHERCHIERTE SACHGEBIETE (Int.Cl.6)** |
| | | | C08K |

Der vorliegende Recherchenbericht wurde für alle Patentansprüche erstellt

| Recherchenort | Abschlußdatum der Recherche | Prüfer |
|---|---|---|
| DEN HAAG | 18. November 1994 | Engel, S |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)